# EUROPÄISCHE PATENTSCHRIFT

(11) **EP 0 946 279 B1**
(45) Veröffentlichungstag und Bekanntmachung des Hinweises auf die Patenterteilung: **10.10.2001**
(21) Anmeldenummer: 97911098.8
(22) Anmeldetag: 13.11.1997
(51) Int. Cl.: B01J 19/00, B01F 13/08

(54) **REAKTIONSKAMMERSYSTEM FÜR DIE CHEMISCHE SYNTHESE ODER VERWANDTE ANWENDUNGEN**
REACTION CHAMBER SYSTEM FOR CHEMICAL SYNTHESIS OR RELATED APPLICATIONS
SYSTEME DE CHAMBRE DE REACTION DE SYNTHESE CHIMIQUE OU APPLICATIONS APPARENTEES

(30) Priorität: 13.11.1996 CH 281196
(43) Veröffentlichungstag der Anmeldung: 06.10.1999
(73) Patentinhaber: Hettlab AG, 8806 Bäch (CH)
(72) Erfinder: Dobelin, Werner, 4153 Reinach (CH)
(74) Vertreter: Braun, André
(86) Internationale Anmeldenummer: CH9700431
(87) Internationale Veröffentlichungsnummer: WO9820965

(56) Entgegenhaltungen:
- WO-A-96/33010
- DE-A- 3 723 004
- US-A- 3 622 128
- US-A- 4 925 629
- US-A- 5 302 347

## Beschreibung

Die Erfindung betrifft ein Reaktionskammersystem, mit dem gleichzeitig mehrere flüssige oder in Flüssigkeit gelöste, aggressive oder gefährliche Proben bearbeitet werden können.

Bei der gleichzeitigen Bearbeitung von mehreren Proben treten Probleme auf, welche bisher noch nicht zufriedenstellend gelöst sind.

Aggressive oder gefährliche Proben werden meist einzeln abgearbeitet. Bekannte Systeme wie Vakuumzentrifugen bedürfen spezieller Probenracks und sind nur für einzelne Bearbeitungsschritte (z. B. Trocknen) geeignet. Dies ist mit einer Reihe von Nachteilen verbunden.

Aus US-A-4,925,629 ist eine Probenverarbeitungsvorrichtung bekannt, die in einem offenen Behälter angeordnete Probengefässe in Form von Mikrotiterplatten enthält, welche mittels eines unabhängigen, unter dem Behälter angeordneten Antriebs geschüttelt werden können. Wegen der offenen Anordnung der Proben ist die Vorrichtung für die Bearbeitung aggressiver oder gefährlicher Proben nicht geeignet. Vor allem aber wird den Proben durch den Magnetstab nur eine undefinierte Vibration vermittelt, die keineswegs den Anforderungen einer anspruchsvollen Probenverarbeitung genügt.

US-A-3,622,128 zeigt eine Probentransporteinrichtung mit einer integrierten, während des Transports wirksamen magnetischen Mischfunktion. Es handelt sich nicht um ein Reaktionskammersystem, das zur Bearbeitung der genannten problematischen Proben geeignet wäre. Ausserdem ist es auch bei diesem System nicht möglich, den Proben eine für eine anspruchsvolle Probenbearbeitung erforderliche Bewegung zu vermitteln. Die Probenbehälter können nur in einer festgelegten Position um ihre Achse hin- und hergedreht werden.

Der Erfindung liegt daher die Aufgabe zugrunde, ein Reaktionskammersystem anzugeben, mit dem gleichzeitig mehrere Proben bearbeitet werden und mehrere Bearbeitungsschritte automatisch erfolgen können, wie dies beispielsweise in der kombinatorischen chemischen Synthese benötigt wird.

Erfindungsgemäss wird dies gelöst durch ein Reaktionskammersystem der eingangs genannten Art, das sich auszeichnet durch eine geschlossene Reaktionskammer mit einer auf dem Boden der Reaktionskammer frei stehenden Plattform zur Aufnahme von Probengefässen und einen ausserhalb der Reaktionskammer angeordneten, die Plattform mittels magnetischer Kopplung bewegenden Schüttelantrieb.

Zweckmässigerweise ist die Reaktionskammer gegenüber den Proben resistent, sowie vakuum- und temperaturbeständig. Vorzugsweise sind ausserhalb der Kammer Heizstrahler zum Heizen der Proben angeordnet. Ausserdem sind vorzugsweise Mittel zum Füllen und Entleeren von Probengefässen während des Betriebs vorhanden.

Im folgenden wird anhand der beiliegenden Zeichnungen ein bevorzugtes Ausführungsbeispiel der Erfindung beschrieben. Es zeigen:
- Fig. I:: eine schematische Darstellung eines Reaktionkammersystems
- Fig. II:: Schüttelantriebsystem wie dies im System nach Fig. I zum Einsatz kommt
- Fig. III:: eine einzelne Magnetkopplungseinheit wie sie im System nach Fig.II zum Einsatz kommt.

**Wie Fig. I** zeigt, ist eine Reaktionskammer 1 von oben durch eine Glasplatte 2 verschlossen mit einer Dichtung 3 abgedichtet und durch eine Mantelheizung 4 geheizt. Zusätzlich kann der Innenraum der Reaktionskammer mit einem Infrarotstrahler 5 geheizt werden. Eine Schüttelplatte 6 in der Reaktionskammer 1 wird mit einem Schüttelantrieb 7 getrieben. Der Aufbau des Schüttelantriebs ist in Fig. II und III detailliert gezeigt. Probengefässe 8 werden in einem Probenrack 9 positioniert und auf der Schüttelplatte 6 montiert. Alternativ können Probenrack 9 und die Schüttelplatte 6 aus einer Finheít bestehen. Ueber Anschlüsse 10 können elektrische-, Entlastungs-, Gas-, Vakuum-, Lösungsmittel-, Reagenzien- und Sensor-Leitungen in die Reaktionskammer 1 geführt werden. Die Anschlüsse 10 und die Mantelheizung 4 sind in Fig. I grob schematisch gezeigt. Selbstverständlich sind sie gemäss dem Stand der Technik ausgebildet. Auch die Dichtung 3, die Glasplatte 2 sowie der Infrarotstrahler 5 werden nicht näher beschrieben weil sie entsprechend dem einschlägigen Stand der Technik ausgeführt sind.

**Wie Fig. II** zeigt, ist die Schüttelplatte 6 mit Lagerzapfen 11 fest verbunden. Im Boden 13 der Reaktionskammerboden sitzen Lagerschalen 12. Unterhalb der Lagerschalen 12 ist die Reaktionskammer 1 durch die Glaseinsätze 14 verschlossen. Der Schüttelantrieb 7 mit Treibern 16 befindet sich ausserhalb der Reaktionskammer 1 und wird von einem Motor 15 angetrieben.

Die an der Schüttelstelle 6 montierten Lagerzapfen 11 stehen in den Lagerschalen 12. Pro Schüttelplatte 6 werden mindestens drei Lagerzapfen 11 mit entsprechenden Lagerschalen 12 benötigt. Die Auslenkung der Schüttelbewegung ist durch die Durchmesserdifferenz, um die der Lagerzapfen 11 kleiner ist, als der Innendurchmesser der Lagerschale 12, gegeben. Die Schüttelplatte 6 beschreibt somit eine Kreisbewegung. Um eine hohe Schüttelfrequenz erreichen zu können sind die elektrischen nicht leitenden Glaseinsätze 14 in dem sonst metallischen Reaktionskammerboden 13 eingesetzt, damit keine Bremswirkung *durch* Wirbelströme erfolgt. Treibermagnete 18/19 berühren die Glaseinsätze 14 nicht.

**Wie Fig. III** zeigt, ist ein Schüttlermagnet 20 im Lagerzapfen 11 eingeschlossen und dadurch mit der Schüttelplatte 6 fest verbunden. Die Lagerschale 12 und der Glaseinsatz 14 sitzen im Reaktionskammerboden 13 zwischen den Treibermagneten 18/19 und dem Schüttelmagnet 20.

Der Schüttelmagnet 20 wird, bedingt durch die Wahl der Polarisierung, vom Treibermagnet 18 angezogen und vom Treibermagnet 19 abgestossen.

Die Reibung auf der Grundfläche in der Lagerschale 12 und der Stirnseite des Lagerzapfens 11 ist abhängig von der zu schüttelnden Gesamtmasse und der Magnetkraft.

Mit zunehmender Drehzahl der Treibermagneten 18/19 wird der Schüttelmagnet 20 nachgezogen. Er befindet sich nicht mehr in der optimalen Position über dem anziehenden Treibermagnet 18. Als Folge kommt der Schüttelmagnet 20 dem abstossenden Treibermagneten 19 näher. Dadurch verringert sich die Reibung in der Lagerschale 12, was die Erhöhung der Tourenzahl begünstigt.

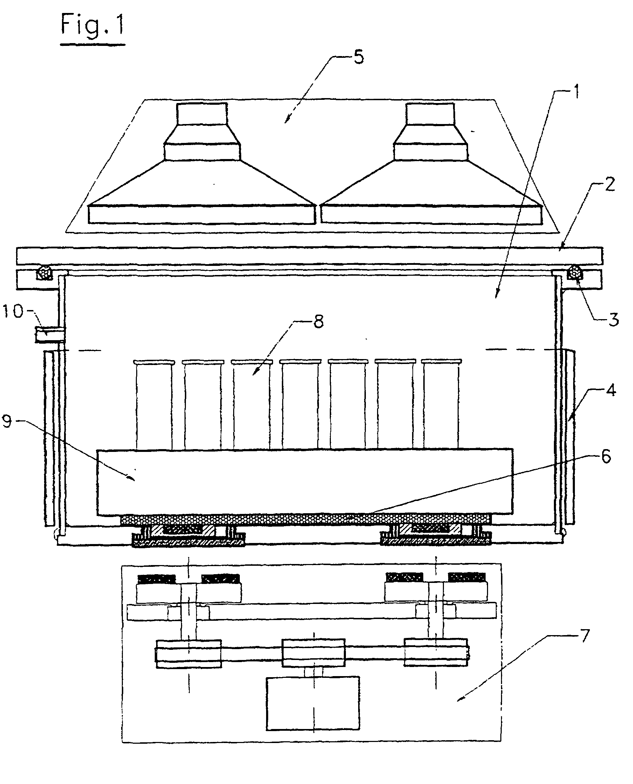

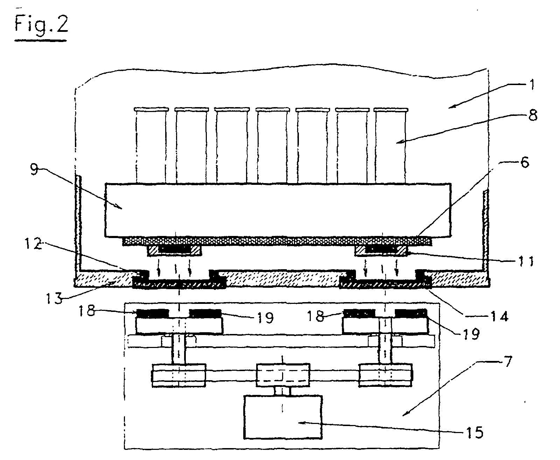

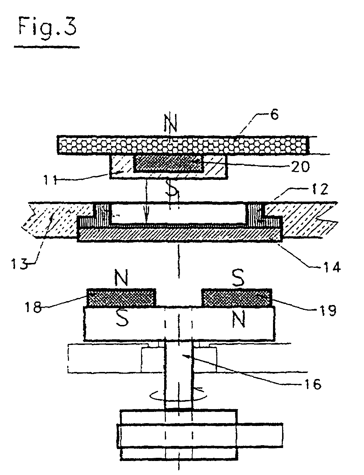

## Patentansprüche

1. Reaktionskammersystem zur gleichzeitigen Bearbeitung mehrerer flüssiger oder in Flüssigkeit gelöster, aggressiver oder gefährlicher Proben, **gekennzeichnet durch** eine geschlossene Reaktionskammer (1) mit einer auf dem Boden der Reaktionskammer frei stehenden Plattform (6) zur Aufnahme von Probengefässen (8) und einen ausserhalb der Reaktionskammer angeordneten, die Plattform mittels magnetischer Kopplung bewegenden Schüttelantrieb (12, 15-19).

2. Reaktionskammersystem nach Anspruch 1, **dadurch gekennzeichnet, dass** der Reaktionskammerboden vertiefte Lagerschalen (12) aufweist und dass die Plattform (6) mit Lagerzapfen (11) versehen ist, die einen geringeren Durchmesser besitzen als die Lagerschalen und in den Lagerschalen stehen.

3. Reaktionskammersystem nach Anspruch 1, **dadurch gekennzeichnet, dass** die Kammer (1) gegenüber aggressiven Proben resistent, sowie vakuum- und temperaturbeständig ist.

4. Reaktionskammersystem nach Anspruch 1, **gekennzeichnet durch** ausserhalb der Kammer (1) angeordnete Heizstrahler.

5. Reaktionskammersystem nach Anspruch 1, **gekennzeichnet durch** Leitungsanschlüsse (10) zum Füllen und Entleeren der Probengefässe (8) während des Betriebes.

6. Reaktionskammersystem nach Anspruch 1, **dadurch gekennzeichnet, dass** der Schüttelantrieb mehrere rotierende synchronlaufende Treiber (16) mit Treibermagneten (18/19) aufweist und dass die Lagerzapfen (11) mit integrierten Schüttelmagneten (20) versehen sind.

7. Reaktionskammersystem nach Anspruch 1, **gekennzeichnet durch** elektrisch nicht leitende Einsätze (14), die die Wirbelstrombremswirkung im Magnetkopplungsbereich verhindern.

8. Reaktionskammersystem nach Anspruch 1, **gekennzeichnet durch** einen den Schüttelmagneten (20) abstossenden Treibermagneten (19) zur Minderung der Reibung bei steigender Schüttelgeschwindigkeit.

9. Verwendung eines Systems nach einem der Ansprüche 1 - 8, **gekennzeichnet durch** den Einsatz im Bereich der chemischen kombinatorischen Synthese, als Verdampfer.

## Claims

1. Reaction chamber system for the simultaneous processing of several aggressive or hazardous samples which are liquid or dissolved in a liquid, **characterized by** a closed reaction chamber (1), on the floor of which there is a free-standing platform (6) for accommodating sample vessels (8), and outside which there is a shaker (12, 15-19) that moves the platform by means of magnetic coupling.

2. Reaction chamber system according to Claim 1, **characterized in that** the floor of the reaction chamber has recessed bearing cases (12) and **in that** the platform (6) is provided with bearing necks (11) which have a smaller diameter than the bearing cases and sit in the bearing cases.

3. Reaction chamber system according to Claim 1, **characterized in that** the chamber (1) is resistant to aggressive samples, vacuum and temperature.

4. Reaction chamber system according to Claim 1, **characterized by** radiant heaters located outside the chamber (1).

5. Reaction chamber system according to Claim 1, **characterized by** line connectors (10) for filling and emptying the sample vessels (8) during operation.

6. Reaction chamber system according to Claim 1, **characterized in that** the shaker has several synchronous rotating drivers (16) with driving magnets (18/19) and **in that** the bearing necks (11) are provided with integrated shaking magnets (20).

7. Reaction chamber system according to Claim 1, **characterized by** electrically non-conducting inserts (14) that prevent the eddy current braking action in the magnetic coupling region.

8. Reaction chamber system according to Claim 1, **characterized by** a driving magnet (19) that repels the shaking magnet (20) in order to reduce the friction when the shaking speed increases.

9. Use of a system according to one of Claims 1 - 8, **characterized in that** it is applied as an evaporator in the field of chemical combinatorial synthesis.

## Revendications

1. Système de chambre de réaction permettant le traitement simultané de plusieurs échantillons agressifs ou dangereux, liquides ou dissous dans un liquide, **caractérisé par** une chambre de réaction (1) fermée comprenant une plate-forme (6), reposant librement sur le fond de la chambre de réaction et servant à recevoir des réceptacles d'échantillon (8), et un dispositif d'entraînement d'agitation (12, 15-19) disposé à l'extérieur de la chambre de réaction et déplaçant la plate-forme au moyen d'un couplage magnétique.

2. Système de chambre de réaction suivant la revendication 1, **caractérisé en ce que** le fond de chambre de réaction comporte des cuvettes de palier (12) en retrait et **en ce que** la plate-forme (6) est pourvue de tourillons (11) qui ont un diamètre plus petit que les cuvettes de palier et sont disposés dans les cuvettes de palier.

3. Système de chambre de réaction suivant la revendication 1, **caractérisé en ce que** la chambre (1) est résistante vis-à-vis d'échantillons agressifs, ainsi que résistante aux dépressions et aux températures.

4. Système de chambre de réaction suivant la revendication 1, **caractérisé par** une source de rayonnement de chaleur disposée à l'extérieur de la chambre (1).

5. Système de chambre de réaction suivant la revendication 1, **caractérisé par** des raccords de tuyauterie (10) servant au remplissage et au vidage des réceptacles d'échantillon (8) pendant le fonctionnement.

6. Système de chambre de réaction suivant la revendication 1, **caractérisé en ce que** le dispositif d'entraînement d'agitation comprend plusieurs dispositifs d'excitation (16) à mouvement synchrone comportant des aimants d'excitation (18/19) et **en ce que** les tourillons (11) sont pourvus d'aimants d'agitation (20) intégrés.

7. Système de chambre de réaction suivant la revendication 1, **caractérisé par** des pièces rapportées (14) non conductrices de l'électricité qui empêchent l'effet de freinage par courants de Foucault dans la zone de couplage magnétique.

8. Système de chambre de réaction suivant la revendication 1, **caractérisé par** un aimant d'excitation (19) repoussant les aimants d'agitation (20) et servant à réduire le frottement pour une vitesse d'agitation qui croît.

9. Application d'un système suivant l'une des revendications 1 - 8, **caractérisée par** l'utilisation dans le domaine de la synthèse combinatoire chimique, en tant qu'évaporateur.
